(19) Europäisches Patentamt
European Patent Office
Office européen des brevets

(11) **EP 4 433 557 B1**

(12) **EUROPEAN PATENT SPECIFICATION**

(45) Date of publication and mention
of the grant of the patent:
**03.12.2025   Bulletin 2025/49**

(21) Application number: **22818922.1**

(22) Date of filing: **03.11.2022**

(51) International Patent Classification (IPC):
***C10G 33/04*** (2006.01)      ***C02F 1/68*** (2023.01)

(52) Cooperative Patent Classification (CPC):
**C10G 33/04; C02F 1/682;** C02F 2101/32;
C02F 2103/08; C02F 2103/365; Y02A 20/204

(86) International application number:
**PCT/PT2022/050030**

(87) International publication number:
**WO 2023/091038 (25.05.2023 Gazette 2023/21)**

(54) **OIL DISPERSANT FORMULATION, METHODS AND USES THEREOF**

ÖLDISPERSIONSFORMULIERUNG, VERFAHREN UND VERWENDUNGEN DAVON

FORMULATION DE DISPERSANT D'HUILE, PROCÉDÉS ET UTILISATIONS ASSOCIÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.11.2021   PT 2021117583**

(43) Date of publication of application:
**25.09.2024   Bulletin 2024/39**

(73) Proprietors:
• **Instituto Superior Técnico**
1049-001 Lisboa (PT)
• **Sintef Ocean**
7010 Trondheim (NO)

(72) Inventors:
• **CASTELO ALVES FERREIRA, Frederico**
1049-001 Lisboa (PT)
• **FAROOQ, Umer**
7036 Trondheim (NO)
• **SABINA SZCZYBELSKI CIORDIA, Ariadna**
7010 Trondheim (NO)
• **NETZER, Roman**
7023 Trondheim (NO)
• **RICARDO TORRES FARIA, Nuno**
1049-001 Lisboa (PT)
• **MARIA MACHADO BORGES, Margarida**
1049-001 Lisboa (PT)
• **KEKOVIC, Petar**
1049-001 Lisboa (PT)

(74) Representative: **Patentree**
**Edificio Net**
**Rua de Salazares, 842**
**4149-002 Porto (PT)**

(56) References cited:
**WO-A1-2018/197623**

• **VENKATARAMAN SWETHAA ET AL: "Extraction,
purification and applications of biosurfactants
based on microbial-derived glycolipids and
lipopeptides: a review", ENVIRONMENTAL
CHEMISTRY LETTERS, SPRINGER
INTERNATIONAL PUBLISHING, CHAM, vol. 20,
no. 1, 17 November 2021 (2021-11-17), pages 949
- 970, XP037692925, ISSN: 1610-3653, [retrieved
on 20211117], DOI: 10.1007/S10311-021-01336-2**
• **BANAT I M ET AL: "Potential commercial
applications of microbial surfactants", APPLIED
MICROBIOLOGY AND BIOTECHNOLOGY,
SPRINGER BERLIN HEIDELBERG, BERLIN/
HEIDELBERG, vol. 53, no. 5, 1 May 2000
(2000-05-01), pages 495 - 508, XP002290527,
ISSN: 0175-7598, DOI: 10.1007/S002530051648**

Remarks:
The file contains technical information submitted
after the application was filed and not included in this
specification

**Description**

**TECHNICAL FIELD**

The present disclosure relates to an environmentally friendly and efficient bio-based oil dispersant for application in oil industry under different environmental conditions.

**BACKGROUND**

Planning responsible oil production and transportation strategies is one of the most critical challenges which the oil and gas industry is facing today. Several areas of this industry currently require the use of synthetic chemicals on a large scale. During the implementation of enhanced oil recovery (EOR) processes, there are several environmental risks associated with the utilization of EOR chemicals [1], especially due to the discharge of water after its use, potentially resulting in pollution of soils, surface waters and groundwater, with particularly harmful consequences in the Arctic and more vulnerable ecosystems.

The use of chemical dispersants as an oil spill response (OSR) measure has been generally accepted [2, 3]. However, there is evidence that these products can be highly toxic to marine planktonic [4-6]. Particularly, it has been reported that the use of the anionic surfactant Dioctyl sodium sulfosuccinate (DOSS), which is an important component of the most widely used commercial oil dispersant Corexit 9500A reduces the rate of oxidation of crude oil by microbial catalysis and has toxic effects on microalgae and other marine organisms. Moreover, the currently used surfactants/dispersants are not effective over wide temperature and salinity ranges. Therefore, there is an urgent need to replace synthetic oil dispersants, which are crude oil derivatives and hazardous chemicals, by environmentally friendly bio-based compounds with high ecological performance and high dispersion effectiveness (DE) over wide salinity and temperature ranges.

Dispersants currently used in oil spills are usually a blend of non-ionic and anionic surfactants dissolved in a solvent base. Surfactants are amphiphilic molecules containing both hydrophobic and hydrophilic regions, so they are soluble in both oil and water phases. An empirical parameter used for the classification of surfactants is the hydrophilic-lipophilic balance (HLB) number. The HLB is defined as:

$$HLB = 20\,X\,\frac{Mh}{M}$$

(Equation 1)

Where $M_h$ is the molecular weight of the hydrophilic head group of the surfactant molecule, and $M$ is the molecular mass of the complete molecule. HLB is given on a scale of 1 - 20. An HLB value between 1 - 8 shows a lipophilic surfactant (oil soluble), whereas an HLB value between 12 - 20 shows a hydrophilic surfactant (water soluble), promoting the formation of water-in-oil (W/O) and oil-in-water (O/W) emulsions, respectively. A surfactant with an HLB between 8 and 12 may promote either type of emulsion, but generally promotes O/W emulsions.

The working principle of the dispersant is to reduce the size of the oil droplets by lowering the interfacial tension (IFT) between the oil and water under the wave action. This is a process of emulsification, where an effective dispersant must convert the oil slick into discrete droplets that remain stable to coalescence. The oil droplets, which are stabilized by adsorbed surfactant molecules, are then carried below the water surface, where the oil in them is subsequently degraded by various microorganisms present in the water. The fraction of the spilled oil that is dispersed as droplets into the water column is termed the dispersion effectiveness (DE). Besides temperature and salinity, major factors affecting DE are oil viscosity, oil emulsification, mixing energy, dispersant formulation and dispersant-to-oil ratio (DOR).

In general, biosurfactants have numerous advantages in comparison with synthetic surfactants, especially regarding high biodegradability rate, low toxicity, high selectivity and maintaining their activity even in extreme temperature, pH and salinity conditions [7]. When biosurfactants are applied, their monomers organize spherically (micelles), in a way that the hydrophobic region is turned to the center, composing the nucleus, and the hydrophilic region is turned to the sphere surface, making an interface with water. The biosurfactants efficiency is determined by their critical micelle concentration (CMC), the values at which micelles start to form [8]. Micelles are produced as a result of several weak interaction forces, such as Van der Waals forces and hydrogen bonds. Micelle formation leads to the reduction in surface and interfacial tension, due to the decrease in the force of repulsion between immiscible liquids [9].

The three most promising microbial biosurfactants for bioremediation purposes are sophorolipids produced by *Starmerella bombicola* (also known as *Candida bombicola),* among other yeasts; mannosylerythritol lipids (MELs) produced by *Moesziomyces spp.* (previously named *Pseudozyma spp.*) yeasts; and rhamnolipids produced by some *Pseudomonas spp.,* such as *P. aeruginosa.* MELs show strong activity against gram positive bacteria, weak activity against gram negative bacteria and no activity against fungi, which creates uncertainties regarding their influence on the whole biodegradation process.[10]

Freitas et al. [11] report the formulation process of a biosurfactant, sophorolipids, for application as an oil dispersant, but do not support the commercial potential for use this biosurfactant with the study of relevant dynamic interfacial mechanisms. This is due to a general misperception that surface tension and interfacial tension (IFT) are interchangeable concepts. However, for oil dispersion application the IFT of any oil dispersant formulation must be evaluated against seawater under variable conditions. This is particularly relevant at an early stage of the development of oil dispersant formulations in order to understand and prevent surfactant leaching. In addition, the manner of mixing the crude oil with a pure dispersant prior to adding to seawater greatly affects DE. Thus, different standardized dispersibility tests should be performed to evaluate the effect of mixing energy.

Venkataraman Swethaa et al "Extraction, purification and applications of biosurfactants based on microbial-derived glycolipids and lipopetides: a review" discloses methods for biosurfactant downstream processing with a focus on glycolipids and lipopeptides. Banat I M et al "Potential commercial applications of microbial surfactants" discloses commercial use of biosurfactants in pollution remediation because of their ability to stabilize emulsions. However, neither Venkataraman Swethaa et al nor Banat I M et al discloses the use of combination of a biosurfactant, such as a mixture of mannosylerythritol lipids, and a polyethylene glycol sorbitan ester for dispersing a crude oil or a petrochemical spill.

These facts are disclosed in order to illustrate the technical problem addressed by the present disclosure.

**GENERAL DESCRIPTION**

The present disclosure relates to a class of biosurfactants, MELs, which are stable at a wide range of temperatures and as non-ionic surfactants, their surface-active properties are stable over a wide pH and ionic strength range. Due to these properties, MELs are suitable for long-term storage. Together with their high biodegradability and low toxicity, MELs represent one of the most promising biosurfactants types with high potential for a broad range of industrial applications. They can also be produced sustainably from low-cost substrates by non-pathogenic microorganisms (*Moesziomyces spp.,* formerly known as *Pseudozyma spp.*).

The present disclosure relates to an oil dispersant composition comprising non-toxic components for the marine environment, wherein the obtained dispersed oil particles are biodegradable. The present disclosure surprisingly discloses an environmentally friendly oil dispersant formulation based on bio-based compounds with high ecological performance and high dispersion effectiveness over a wide salinity and temperature ranges, preferably even at low temperatures. It was also demonstrated that the obtained dispersed oil particles are degraded by action of the microbial consortium present on the sea water and are not toxic for aquatic animals, preferably shellfish such as species of small shrimps.

In an embodiment, the MEL-based oil dispersant formulation comprises a blend of MELs (hydrophilic-lipophilic balance, HLB, 8.6) (42% w/w), polyethylene glycol sorbitan monooleate (HLB 15) (28% w/w), and a solvent base (30% w/w). In a further embodiment, the solvent base contains 66.7% (v/v) of a lighter fuel and 33.3% (v/v) of 2-ethylhexyl acetate.

For the scope and interpretation of the present disclosure, the term "lighter fuel" is defined as a gas, oil, or other fuel used in a lighter. In an embodiment, the lighter fuel is a combination of hydrocarbons, C10-C13, n-alkanes, iso-alkanes, cyclic, <2% aromatics. In an embodiment, the lighter fuel is white spirit type 3 (EC nº 918-481-9, or CAS Nº 64742-48-9).

In an embodiment, the DE of the MEL-based oil dispersant formulation was evaluated by IFT measurement and its performance on laboratory dispersibility tests using different types of crude oil, and bench-marked against Corexit 9500A (NALCO Environmental Solutions LLC). Crude oils used in the DE evaluation were (i) a naphthenic crude oil (fresh and weathered 200 ºC+ Troll B), (ii) an asphaltenic crude oil (Oseberg A), (iii) a waxy crude oil (Norne 2), (iv) an intermediate fuel oil (IFO) 180 bunker fuel with high asphaltenic contents, and (v) a marine diesel oil (MDO) which is a blend of gasoil and heavy fuel oil.

For the scope and interpretation of the present disclosure the term "weathered 200 °C+" indicates that the oil was treated to simulate the evaporation loss of lighter crude oil components, when submitted, for 0.5 to 1 day, to the sea surface weathering. The evaporation was carried out as a simple one-step distillation at vapor temperature of 200 °C.

In an embodiment, the spinning drop tensiometer was used to measure the IFT between seawater and crude oil in the presence of the MEL-based oil dispersant formulation or Corexit 9500A, in order to evaluate the effect of oil dispersant application parameters such as temperature, dispersant-to-oil ratio (DOR), and type of crude oil. The Mackay-Nadeau-Steelman (MNS) test and the Baffled Flask Test (BFT) were used as dispersibility tests with weathered 200 ºC+ Troll B oil and IFO 180 bunker fuel oil at 13 ºC (MNS), and fresh Troll B oil at 22 ºC (BFT). The MNS test is estimated to represent sea-state conditions ranging from moderate to high, while the BFT represents breaking wave conditions. For MNS, both the dynamic and static DE of the oil dispersants were evaluated.

In an embodiment, the use of MEL-based oil dispersant formulation significantly reduces the IFT of crude oils (0.07 - 0.002 mN/m) and exhibits considerably better IFT results, than whith Corexit 9500A, for assays with weathered 200 ᵒC+ Troll B oil and IFO 180 bunker fuel oil. There was no apparent effect of temperature (5 to 60 ᵒC) on the IFT when using naphtenic crude oil (fresh and weathered 200 ᵒC+ Troll B) premixed with MEL-based oil dispersant formulation. In addition, the MEL-based oil dispersant formulation shows a high stability at extremely low concentrations. At low DOR (1:1000 to 1:500), the IFT of fresh Troll B oil was lower when mixed with MEL-based oil dispersant formulation than when mixed with Corexit 9500A, while at moderate (1:100 to 1:250 DOR) or high higher DOR (1:50 to 1:25), the use of Corexit 9500A displays slightly better IFT results.

In an embodiment, the BFT results show that the MEL-based oil dispersant formulation and of Corexit 9500A have similar DE for fresh Troll B oil (93-95%). As for MNS, the MEL-based oil dispersant formulation displays slightly lower DE than Corexit 9500A for dispersion of weathered 200 ᵒC+ Troll B oil and of IFO 180 bunker fuel oil. Preliminary biodegradation studies have also suggested a higher capacity of MELs to promote the biodegradation of crude oil as compared to synthetic surfactants and other biosurfactants (e.g., rhamnolipids). According to Yu et al. [10], MELs have also the potential to outcompete rhamnolipids for bioremediation purposes since MELs show lower critical micelle concentrations and higher production yields.

The present disclosure relates to an oil dispersant composition for dispersing a crude oil or a petrochemical spill comprising: at least 20% (w/w) of a gum comprising a MELs mixture; at least 10% (w/w) polyethylene glycol sorbitan ester, preferably polyethylene glycol sorbitan monooleate; and at least 20% (w/w) of a hydrophobic organic solvent, wherein said organic solvent has a flash point superior to the crude oil or petrochemical spill flash point, preferably superior to 60 °C.

In an embodiment, the disclosed composition comprises 35-45 % (w/w) of the gum comprising a MELs mixture, preferably 42 % (w/w); 25-30 % (w/w) of polyethylene glycol sorbitan ester, preferably 28 % (w/w); and 25-35 % (w/w) of the hydrophobic organic solvent, preferably 30%(w/w).

In an embodiment, the gum mixture consists of a MELs mixture.

In an embodiment, the polyethylene glycol sorbitan ester may be polyethylene glycol sorbitan monooleate.

In an embodiment, the number of carbons (C) in the fatty chains of the MELs range from C8 to C12, preferably C10.

In a further embodiment, at least 50% (w/w) of the fatty chains of mannosylerythritol lipids are C10 chain, preferably 82% (w/w) of the fatty chains of MELs are C10 chain.

In an embodiment, the MELs are selected from a list comprising di-acetylated mannosylerythritol lipid, mono-acetylated mannosylerythritol lipid, de-acetylated mannosylerythritol lipid, or mixtures thereof.

In an embodiment, the gum comprises a mixture at least 50% (w/w) of di-acetylated mannosylerythritol lipid, preferably 55 - 70 % (w/w); 15% (w/w) to 50% (w/w) of mono-acetylated mannosylerythritol lipid, preferably 20 - 35% (w/w); and less than 35 % (w/w) of de-acetylated mannosylerythritol lipid, preferably 2 - 10 % (w/w). In a further embodiment, the gum comprises a mixture of 68% (w/w) of di-acetylated mannosylerythritol lipid, 28% (w/w) of mono-acetylated mannosylerythritol lipid, and 4% (w/w) of de-acetylated mannosylerythritol lipid.

In an embodiment the solvent comprises 65-70 % (v/v) of a lighter fuel.

In a further embodiment, the solvent further comprises 30-35 % (v/v) of 2-ethylhexyl acetate.

In an embodiment, the mass ratio between the MELs and the polyethylene glycol sorbitan ester is 60:40.

In an embodiment the hydrophilic-lipophilic balance of the disclosed composition ranges from 8 to 20, preferably from 8 to 12.

An aspect of the present disclosure relates to the use of the disclosed oil dispersant composition in oil-spill clean-up operations, oil recovery processes, or flow assurance operations in oil industry as a dispersant, preferably as a biodegradable dispersant.

The present disclosure also relates to a method for obtaining the disclosed oil dispersant composition comprising the following steps: obtaining a gum comprising a MELs mixture; blending the MELs mixture with polyethylene glycol sorbitan ester and with a solvent base. In an embodiment, the solvent base comprises 65-70 % (v/v) of lighter fuel and 30-35 % (v/v) of 2-ethylhexyl acetate, preferably 66.7% (v/v) of lighter fuel and 33.3% (v/v) of 2-ethylhexyl acetate.

An aspect of the present disclosure relates to a method for dispersing an oil spill, comprising a step of applying the disclosed oil dispersant composition into an oil in a body of water.

In an embodiment, the oil dispersant composition is applied to the oil in a dispersant to oil ratio ranging from 1:1000 to 1:20.

In an embodiment, the oil dispersant composition is applied to the oil in a dispersant to oil ratio ranging from 1:900 to 1:500.

In an embodiment, the dynamic dispersion effectiveness of the oil dispersant composition in the body of water ranges from 95 to 100% at 22 °C, measured by a Baffled Flask test.

In an embodiment, the static dispersant effectiveness of the oil dispersant composition in the body of water ranges from 45 to 70% at 13 °C, measured by a Mackay-Nadeau-Steelman dispersibility test.

In an embodiment, the IFT between the oil and the body of water, in the presence of the disclosed oil dispersant composition, is below 0.030 mN/m at 20 °C, measured by spinning drop method.

EP 4 433 557 B1

In an embodiment, the dynamic IFT between the oil and the body of water, in the presence of the oil dispersant composition, ranges between 0.04 to 0.002 mN/m at a dispersant to oil ratio of 1:20, from 5 °C to 60 °C, measured by spinning drop method.

In an embodiment the body of water has a salinity ranging from 0 to 5 wt%.

In an embodiment, the environmental toxicity was assessed through the measurement of the median lethal concentration ($LC_{50}$) in *Artemia fransciscana*. These measurements confirmed the environmentally-friendly nature of the disclosed oil dispersant formulation, with $LC_{50}$ values higher than 250 mg/L, preferably higher than 350 mg/L.

**BRIEF DESCRIPTION OF THE DRAWINGS**

The following figures provide preferred embodiments for illustrating the disclosure and should not be seen as limiting the scope of invention.

**Figure 1:** Embodiment of the dynamic interfacial tension (IFT) of weathered 200 ºC+ Troll B oil and IFO 180 bunker fuel oil in seawater (20-22 °C). Oils were premixed with Corexit 9500A (DOR 1:50) or with the MEL-based oil dispersant formulation ("M+T") (DOR 1:20). DOR: dispersant-to-oil ratio.

**Figure 2:** Embodiment of the effect of dispersant-to-oil ratio (DOR) on the interfacial tension (IFT) (0-300 s) of MEL-based oil dispersant formulation ("M+T") -Troll B or and Corexit 9500A-Troll B systems (20-22 °C).

**Figure 3:** Embodiment of the dispersion effectiveness (DE) for the MEL-based oil dispersant formulation ("M+T") or Corexit 9500A in fresh Troll B oil as obtained in the Baffled Flask Test (BFT) (25 ºC). R1-3 are BFT replicates. DOR: dispersant-to-oil ratio.

**Figure 4:** Embodiment of the dispersion effectiveness (DE) for the MEL-based oil dispersant formulation ("M+T") and Corexit 9500A in weathered 200 ºC+ Troll B oil and IFO 180 bunker fuel oil as obtained in the Mackay Nadeau Steelman Test (13 ºC). DOR: dispersant-to-oil ratio.

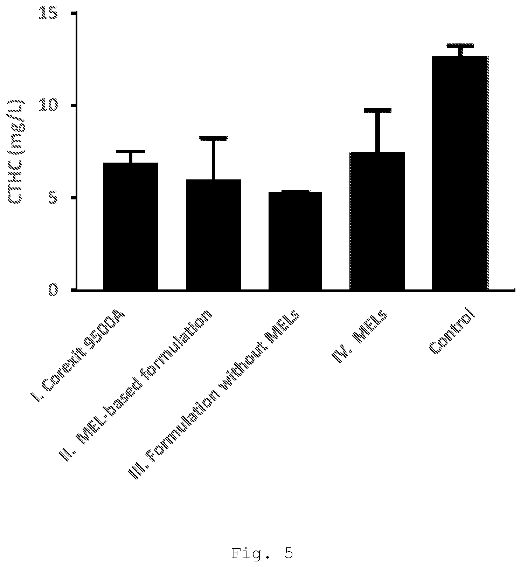

**Figure 5:** Embodiment of the total hydrocarbon content (THC) present after 7 days of incubation, at 25ºC, in sea water and Bushnell-Haas (BH) media contaminated with crude oil (50 mg/L) (Control), contaminated with crude oil (50 mg/L) and mixed with the oil dispersant formulations: Corexit 9500A (I); disclosed MEL-based oil dispersant formulation (II), oil dispersant formulation inhere disclosed (TWEEN® 80 + solvent base), but without MELs (III), and MELs alone as dispersant (IV). Formulations I, II, III were used at a DOR of 1:20 and formulation IV at a DOR of 1:48 (ensuring formulation II and IV contain the same amounts of MELs).

**DETAILED DESCRIPTION**

The present disclosure relates to an oil dispersant composition for use in the treatment of marine or soil oil spills, wherein the resulting oil dispersed particles are biodegradable. This efficient and environmentally friendly oil dispersant can be used for many industrial applications, particularly for oil spill clean-up operations. In oil industry, oil dispersants and surfactants can be used for oil spill response applications, enhanced oil recovery processes and flow assurance operations.

The rising environmental concerns and emergence of stricter regulations on oil recovery, transportation, and clean-up operations has forced the oil and gas sector to seek alternatives to the use of synthetic oil dispersants. The disclosed oil dispersant composition, based on the mannosylerythritol lipid (MEL), exhibits excellent interfacial properties and dispersion effectiveness (DE) with crude oils under different environmental conditions. In particular, when applied to weathered and heavy fuel oils the, use of the MEL-based oil dispersant formulation exhibits considerably better DE results than when applied the more often commercially used oil dispersant, Corexit 9500A. Unlike synthetic oil dispersants, the MELs based dispersant is stable at a wide range of temperatures, pH and ionic strength, and have high biodegradability and low toxicity.

EXAMPLE:

In an embodiment, MELs used in the formulation of the disclosed MEL-based oil dispersant are produced from *M. antarcticus* using conditions previously described [12]. Cultivation starts with initial 40 g/l of D-glucose and after 4 days of cultivation, 20 g/l waste frying oil (WFO) is added. After 10 days, cultivation of *M. antarcticus* is extracted with ethyl acetate twice and the organic phase is collected and evaporated. The obtained orange gum has a purity in MELs of 88-90%. The ratio of the different MELs in this mixture is 68% (w/w) of di-acetylated (MEL-A), 28% (w/w) of mono-acetylated (MEL-B and -C) and 4% (w/w) of de-acetylated (MEL-D). The MELs' fatty acid chains range from C8 to C12 with 82% (w/w) of C10. The HLB for the MEL mixture is 8.6. MELs are then blended with polyethylene glycol sorbitan monooleate and the solvent base, at room temperature, for 2 h (500 rpm). Afterwards, the composition was stored at room temperature.

In an embodiment, the MEL-based oil dispersant formulation, comprises a blend of 42% w/w of a gum comprising a mixture of MELs (hydrophilic-lipophilic balance, HLB, 8.6), 28% w/w of polyethylene glycol sorbitan monooleate (HLB 15), and 30% w/w of a solvent base. The solvent base contains 66.7% (v/v) lighter fuel and 33.3% (v/v) of 2-ethylhexyl acetate.

Interfacial tension measurements of the MEL-based oil dispersant formulation.

In an embodiment, the IFT measurements are performed between crude oil and seawater in a Spinning Drop Tensiometer (SVT-20 N with SVTS 20 control and calculation software DataPhysics Instruments GmbH, Filderstadt, Germany) with a heating/refrigerated circulator for temperature control (F12-ED, Julabo GmbH, Seelbach, Germany). Prior to each measurement, the capillary tube is rinsed three times with dichloromethane, once with toluene, dried with nitrogen gas, rinsed three times with deionized water, dried with nitrogen gas, and then rinsed once with seawater. The capillary is carefully filled with seawater to ensure the absence of air bubbles. After the filling of capillary with seawater, closed the open side of the capillary with a septum held in the septum holder and inserted the fast exchange capillary into the measuring cell. Crude oil (10-30 µL), premixed with dispersant, or crude oil without dispersant (control), is injected into the stationary capillary tube using a 1 mL syringe with a long needle. Rotation is then immediately started and IFT measurements are initiated immediately after placing the droplet in the capillary.

The spinning drop tensiometer works by measuring the radius of oil phase under the high rotational speed using an optical microscope connected to a computer for data acquisition and calculations. The IFT is calculated using the following expression:

$$\gamma = \frac{\Delta\rho\omega^2 R^3}{4}$$

(Equation 2)

Where $\gamma$ (mN/m) is the interfacial tension (IFT) between oil and water phase; $\Delta\rho$ (g/cm3) is the density difference between the crude oil droplet and seawater; $\omega$ (rad / s) is the angular velocity, and R (cm) is the droplet radius.

During the first 5 min, IFT is measured after every 5 s and after this IFT is recorded after interval of 30 s. The IFT measurements are done on multiple droplets and standard deviations are typical ±0.2 mN/m for high IFT values (1 - 20 mN/m) and ±0.01 mN/m for low IFT values (0.001 - 0.9 mN/m).

In an embodiment, crude oils were pre-heated at 50 ºC for 1 h and afterwards mixed with different formulations of oil dispersants at a specific DOR at room temperature for 3 h (500 rpm).

For the scope and interpretation of the present disclosure it is defined that "room temperature" should be regarded as a temperature between 15-30 °C, preferably between 18-25 °C, more preferably between 20-22 °C.

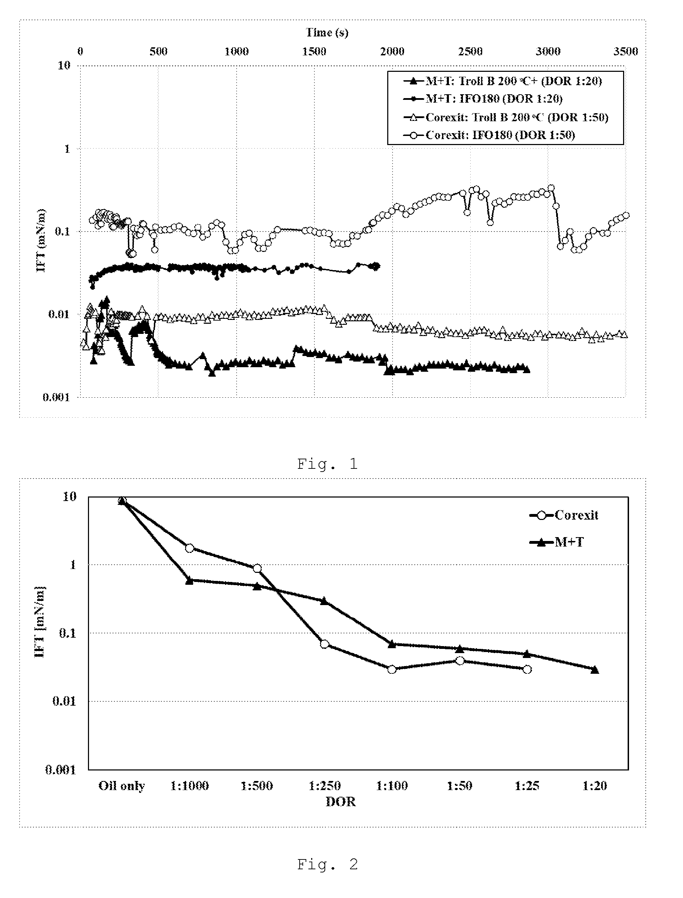

In an embodiment, the MEL-based oil dispersant formulation was premixed with crude oils at a 1:20 DOR. Corexit 9500A was used at a 1:50 DOR as a reference since such dosage yielded the lowest IFT in previous laboratory studies. The overall results obtained, using the MEL-based oil dispersant formulation, indicate that with different types of crude oil, the initial (t = 0 to t = 100 s) and final IFT (after 60 min) vary between 0.006 to 0.070 mN/m, and between 0.002 to 0.070 mN/m, respectively (Table 1). No leaching from the oil/water interface is observed when used the MEL-based oil dispersant formulation with any type of crude oil. Furthermore, for all different types of crude oil assessed, the kinetics of the MEL-based oil dispersant formulation are very fast as the IFT is immediately reduced ~1000 times. On the contrary, with Corexit 9500A, the initial and final IFT of different types of crude oil vary between 0.006 to 0.14 mN/m, and between 0.006 to 0.19 mN/m, respectively. Moreover, some leaching/desorption of Corexit 9500A is observed from the interface between IFO 180 bunker fuel oil and seawater (Figure 1).

**Table 1.** Interfacial tension (IFT) of different types of crude, weathered and fuel oils in seawater measured at 20 ºC. Oils were premixed with Corexit 9500A or with the MEL-based oil dispersant formulation ("M+T") at DOR of 1:50 and 1:20 respectively.

| Oil types | IFT (mN/m) 0-100 s "M+T" (DOR 1:20) | IFT (mN/m) 60 min "M+T" (DOR 1:20) | IFT (mN/m) 0-100 s Corexit 9500A (DOR 1:50) | IFT (mN/m) 60 min Corexit 9500A (DOR 1:50) |
|---|---|---|---|---|
| Fresh Troll B | 0.030 | 0.020 | 0.050 | 0.050 |
| Weathered 200 °C+ Troll B | 0.004 | 0.002 | 0.010 | 0.006 |

(continued)

| Oil types | IFT (mN/m) 0-100 s "M+T" (DOR 1:20) | IFT (mN/m) 60 min "M+T" (DOR 1:20) | IFT (mN/m) 0-100 s Corexit 9500A (DOR 1:50) | IFT (mN/m) 60 min Corexit 9500A (DOR 1:50) |
|---|---|---|---|---|
| Norne 2 | 0.030 | 0.008 | 0.020 | 0.010 |
| Oseberg A | 0.040 | 0.020 | 0.007 | 0.006 |
| Diesel Fuel | 0.070 | 0.070 | 0.050 | 0.040 |
| IFO 180 Bunker Fuel | 0.030 | 0.030 | 0.100 | 0.200 |
| DOR: dispersant-to-oil ratio. | | | | |

In an embodiment, for the naphthenic crude oil (fresh Troll B oil) with the MEL-based oil dispersant formulation, the IFT is reduced from an average value of 9 mN/m to 0.030 mN/m between t = 0 to t = 100 s, and after 1 h the IFT is further reduced to 0.02 mN/m. For fresh Troll B oil, a higher reduction in the IFT is observed with the MEL-based oil dispersant formulation than with Corexit 9500A. For weathered 200 ºC+ Troll B oil, with the MEL-based oil dispersant formulation displays even lower IFT values are achieve than the ones obtained for fresh Troll B oil with the same formulation. For the waxy crude oil (Norne 2), the IFT results obtained with MEL-based oil dispersant formulation or Corexit 9500A. More precisely, the MEL-based oil dispersant formulation and Corexit 9500A reduced, respectively, the IFT to 0.03 mN/m and 0.02 mN/m (0-100 s) and to 0.008 mN/m and 0.010 mN/m (after 60 min). For the asphaltenic crude oil (Oseberg A) and the marine diesel oil (MDO), Corexit 9500A displayed lower IFT values than the MEL-based oil dispersant formulation (Table 1). Finally, for the high-density and highly asphaltenic IFO 180 bunker fuel oil, the MEL-based oil dispersant formulation displays much better IFT results than Corexit 9500A, with average IFT (after 60 min) of 0.03 and 0.20 mN/m, respectively.

In an embodiment, for high density, weathered, highly asphaltenic and highly viscous oils the results indicate that the MEL-based oil dispersant formulation works comparatively better than Corexit 9500A. These results are very surprising and encouraging as it is commonly difficult to reduce the IFT of highly asphaltenic, waxy and weathered oils.

In an embodiment, there is no apparent effect of the variable temperature on the IFT of naphthenic crude oil (fresh Troll B oil) premixed with MEL-based oil dispersant formulation (Table 2). The effect of temperature is also tested in weathered 200 ºC+ Troll B oil premixed with MEL-based oil dispersant formulation or with Corexit 9500A. At 5 ºC, Corexit 9500A displays lower IFT values than the MEL-based oil dispersant formulation. Still, the IFT was significantly reduced by the MEL-based oil dispersant formulation, ranging from 0.007 to 0.009 mN/m. Interestingly, it was noticed a constant IFT along the experimental time, compatible with the absence of a leaching phenomenon. At 20 ºC, both Corexit 9500A and the MEL-based oil dispersant formulation display very low IFT values, but the IFT results were comparatively better with the MEL-based oil dispersant formulation, ranging from 0.002 to 0.004 mN/m. At 60 ºC Corexit 9500A displays slightly better results than the MEL-based oil dispersant formulation. The IFT results indicate that the large variation among temperatures did not reduce the DE of the MEL-based oil dispersant formulation and IFT values were in the range of 0.002 - 0.02 mN/m.

Table 2. Interfacial tension (IFT) of the naphthenic crude oil (fresh and weathered 200 ºC+ Troll B oil) at different temperatures. Oils were premixed with Corexit 9500A and the MEL-based oil dispersant formulation ("M+T") at DOR of 1:50 and 1:20 respectively.

| Oil types | IFT (mN/m) 0-100 s "M+T" | IFT (mN/m) 60 min "M+T" | IFT (mN/m) 0-100 s | IFT (mN/m) 60 min |
|---|---|---|---|---|
| | (DOR 1:20) | (DOR 1:20) | Corexit 9500A (DOR 1:50) | Corexit 9500A (DOR 1:50) |
| Fresh Troll B (5 ºC) | 0.040 | 0.040 | 0.020 | 0.003 |
| Fresh Troll B (20 ºC) | 0.030 | 0.020 | 0.050 | 0.050 |
| Fresh Troll B (60 ºC) | 0.050 | 0.040 | 0.010 | 0.010 |
| Weathered 200 °C+ Troll B (5 ºC) | 0.007 | 0.009 | 0.002 | 0.001 |
| Weathered 200 °C+ Troll B (20 ºC) | 0.004 | 0.002 | 0.010 | 0.006 |
| Weathered 200 °C+ Troll B (60 ºC) | 0.020 | 0.010 | 0.020 | 0.008 |
| DOR: dispersant-to-oil ratio. | | | | |

In an embodiment, the IFT between naphthenic oil (fresh Troll B) and seawater was also evaluated as function of the dispersant dosage or dispersant-to-oil ratio (DOR). The use of MEL-based oil dispersant formulation and Corexit 9500A were compared. The results clearly indicate that at low DOR (1:1000 and 1:500) the DE of the MEL-based oil dispersant formulation is better, while at moderate (1:100 to 1:250) and higher DOR (1:50 and 1:25), Corexit 9500A displays slightly better IFT results than the MEL-based oil dispersant formulation (Figure 2).

Dispersibility tests of the MEL-based oil dispersant formulation

Several standardized methods for evaluating the effect of dispersants have been developed over the last decades. The mixing energy input differs in different test methods, so the DE results obtained reflect the mixing energies.
Mackay-Nadeau-Steelman (MNS) test [13] is estimated to represent a moderate to high sea-state condition. Oil dispersibility requires high energy, which on the sea is generated by the breaking waves during dispersion. In the laboratory, the energy input is supplied by blowing air across the oil/water surface to produce a circular wave motion. In an embodiment, Troll B 200 oC + and IFO 180 were included for dispersibility tests. Oil (10 mL) was applied to 6 liters of seawater and then the dispersant was injected on the oil surface at a DOR of 1:25 for Corexit 9500A and 1:20 for the MEL-based oil dispersant formulation. The oil is confined in a ring on the seawater surface. By removing the ring, the pre-treated oil is released and mixed naturally into the water column during the wave activity. After 5 min of mixing, 500 mL of the oil dispersion was sampled from the system, oil was extracted using dichloromethane liquid-liquid extraction and extracts were analyzed in an ultraviolet spectrophotometer at 410 nm for determining the dynamic dispersion effectiveness (%). After sampling for determining the dynamic DE, mixing was stopped, and another sample was taken 5 min later to determine the static dispersion effectiveness (%).
In an embodiment, Baffled Flask Test (BFT) was performed according to modifications introduced by Zhang et al. [14] to the method developed by Sorial et al. [15]. Moreover, in these assays natural seawater was used instead of artificial seawater. Initially, 120 mL of natural seawater was added to a baffled flask and then 100 $\mu$L of fresh Troll B was carefully added to the seawater surface using a 100-$\mu$L pipette. Afterwards, 4 $\mu$L of either Corexit 9500A or MEL-based oil dispersant formulation was added onto the center of the oil slick. The flask was shaken at a rotation speed of 200 rpm on an orbital shaker (ELMI DOS-20L Digital Orbital Shaker 20mm). After shaking for 10 min, the flask was left stationary for another 10 min. Then 2 mL of the mixture was discarded through a stopcock at the bottom of the flask before and then 30 mL of the sample was collected into a 50-mL measuring cylinder. The 30 mL sample was then poured into a separatory funnel and extracted with 5 mL dichloromethane (DCM, HPLC grade) for three times. Anhydrous sodium sulfate was added into the extract to remove water that may be contained in solvent. Afterwards, the extract was adjusted to a volume of 20 mL for determination of DE by ultraviolet spectrophotometry. The BFT was run in triplicate for each dispersant.
In an embodiment, standard crude oil solutions were prepared for calibrating the ultraviolet spectrophotometer (UVS). Volumes of 5, 10, 15, 20, and 25 $\mu$L Troll B crude oil were added, using a syringe, to 30 mL of dichloromethane (DCM) (HPLC grade), respectively. These Troll B in DCM solutions were regarded as standard references representing DE of 20, 40, 60, 80, and 100%. UVS was employed to measure the absorbance. The absorbance of the extracts was measured at three wavelengths: 340, 370, and 400 nm. The area under the absorbance vs. wavelength curve between 340 and 400 nm was regarded as the relative concentration of dissolved oil [16], and was determined by the following equation using the trapezoidal rule:

$$Area = \frac{(Abs_{340} + Abs_{370}) \times 30}{2} + \frac{(Abs_{370} + Abs_{400}) \times 30}{2}$$

(Equation 3)

DE can be calculated as the ratio of the area of dispersed oil to the area of total oil added to the system (equals to the corresponding volume of oil dissolved in DCM). The standard curve was plotted using the value of area to DE. The coefficient of determination should be larger than 0.99.

*Baffled Flask tests*

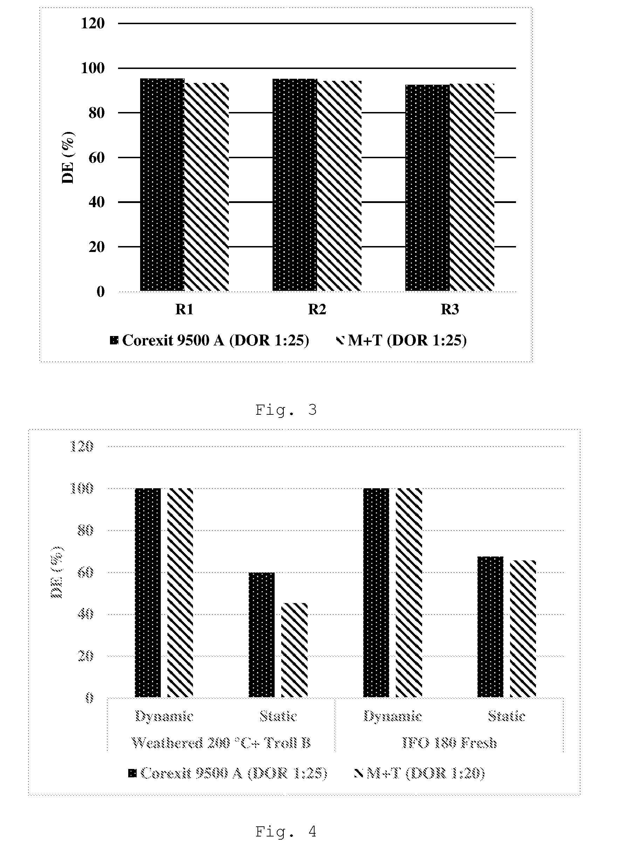

Figure 3 shows the dispersion effectiveness (DE) of Corexit 9500A of the MEL-based oil dispersant formulation for fresh Troll B oil evaluated by the Baffled Flask Test (BFT). For the MEL-based oil dispersant formulation, DE ranges from 93 to 94%, whereas for Corexit 9500A DE ranges from 93 to 95%. The DE obtained for fresh Troll B oil alone (without dispersant) is usually below 10%. The BFT results indicate a high dispersibility of fresh Troll B oil both using MEL-based and the Corexit 9500A oil dispersants. The results may, however, be misleading because of the high shear imparted on the oil-water mixtures. The use of alternative dispersibility tests like the MNS test can help to elucidate differences between both dispersants' efficacy.

*Mackay-Nadeau-Steelman tests*

For the Mackay-Nadeau-Steelman dispersibility test (MNS), weathered oil 200 °C + Troll B and heavy IFO 180 bunker fuel oil were selected as target oils. The MNS results show a 100% dynamic DE with both dispersants. The control sample of weathered 200 °C + Troll B oil (without oil dispersant) also shows 78% DE, indicating that the mechanical energy of the wave generated in the system for mixing, is a major contributor to the dynamic DE.

In addition to the dynamic DE, the static DE was also estimated 5 min after mixing has been stopped. The static DE shows a relatively high dispersibility of IFO 180 bunker fuel oil (i.e., >60%), both for the MEL-based oil dispersant formulation and Corexit 9500A (Figure 4). For weathered 200 °C + Troll B oil, Corexit 9500A had a higher DE (60%) than the MEL-based oil dispersant formulation (45%). A different DOR was used for each dispersant based on their effective dosage.

Mechanism for interfacial tension reduction and dispersibility by the MEL-based oil dispersant formulation

The overall results show that the MEL-based oil dispersant formulation exhibits excellent IFT and dispersibility results and are comparable with a standard and key dispersant for the industry (i.e., Corexit 9500A). Moreover, for the highly asphaltenic and high-density crude oils the IFT results are even better for MEL-based oil dispersant formulation than for Corexit 9500A.

In an embodiment, the results can be explained by providing the molecular level discussion of the synergy between MEL and polyethylene glycol sorbitan monooleate molecules. As explained earlier, MELs are hydrophobic and polyethylene glycol sorbitan monooleate is quite hydrophilic and water soluble. The HLB of the combination of the two surfactants can be calculated by the following expression:

$$HLB = 8.6\ W_M + 15\ W_{PGSE} \qquad\qquad (Equation\ 4)$$

Where, $W_M$ and $W_{PGSE}$ are, respectively, the weight fraction of MELs and polyethylene glycol sorbitan ester, in particular polyethylene glycol sorbitan monooleate, in the blend. Previous studies [17, 18] showed that HLB in the range of 9-12 may be optimal for creating the efficient dispersant for OSR application. In an embodiment, the lowest IFT with fresh Troll B oil (0.01 mN/m) was achieved at a 60:40 ratio (w/w) of MELs and polyethylene glycol sorbitan monooleate (TWEEN® 80) (42% (w/w) MELs + 28% (w/w) TWEEN® 80 + 30% (w/w) Solvent base) where HLB is 11.6.

Previous studies by Athas et al. [17] and Jin et al. [18] reported that the dispersant mixture of Lecithin (L) and TWEEN® 80 (T) at the 60:40 ratio (w/w) with an HLB value of 10.8 exhibited the best emulsification results with crude oil. They found that the L/T blend shows a synergistic effect, but neither L nor T is effective on its own. Moreover, Shah et al. [19] also studied that the stable O/W emulsion formed at an optimal ratio of 60:40 (w/w) of lactonic sophorolipid and choline laurate (ionic surfactant). Moreover, the minimum IFT achieved with L/T and sophorolipid/choline laurate mixtures against the crude oil/seawater interface was 0.075 mN/m and 1.5 mN/m respectively.

The synergy between MELs and T is likely due to the strong Van der Waals forces between the hydrocarbon chains of both surfactant molecules. Beside the tail interaction, there also exists a favorable interaction between the mannose and oxyethylene head groups of MELs and T molecules, respectively. Athas et al. [17] suggested that the oxyethylene head group of a T molecule also provides the steric stabilization to the oil droplet by extending into the water phase. The combination of both Van der Waals forces and stabilization of oxyethylene head groups creates a very stable interfacial film at the crude oil/water interface. Such stability prompts a quick decrease in the IFT and prevents the desorption of MEL and T molecules from the interface.

Comparison of the MEL-based oil dispersant formulation with other solutions

One of the main advantages of using the MEL-based oil dispersant formulation for OSR and EOR applications is the combination of both high DE in crude oil and stability of the resulting emulsions. In an embodiment, the MEL-based oil dispersant formulation was compared with two examples of green and/or efficient oil dispersants known from the state of the art: L/T-based oil dispersant [17, 18], and an ionic liquids-based oil dispersant (namely a combination of 1-butyl-3-methylimidazolium lauroylsarcosinate, 1,1'-(1,4-butanediyl)bis(1-H-pyrrolidinium, which are environmentally problematic and not biobased) dodecylbenzenesulfonate, tetrabutylammonium citrate, tetrabutylammonium polyphosphate and tetrabutylammonium ethoxylate oleyl ether glycolate as described in Baharuddin et al. [20]). The L/T blend shows a synergetic action, when the two surfactants are combined at the oil/water interface, on further enhancing the emulsification capacity of the dispersant. The ionic liquids-based oil dispersant is presented as a biodegradable and non-toxic solution.

Unlike the L/T-based oil dispersant described in Jin et al. [18], the MEL-based oil dispersant formulation shows no desorption/release of surfactant molecules from the crude oil (fresh Troll B oil)/seawater interface, at temperatures between 5 and 60 ºC and from high (1:25) to moderate DOR (1:100). The phenomenon of surfactant desorption (leaching) can be expressed as either an increase in the IFT of the oil dispersant mixture or an increase in the mean diameter of the emulsion, as reported by Jin et al. [18]. In addition, the formulation used by Jin et al. [18] contains an ethanol base which is not adequate for OSR application. Selected solvents should have a low toxicity, high flash point (i.e., >60 ºC) and yield a good oil dispersion (low viscosity).

The MEL-based oil dispersant formulation exhibits much lower IFT values (0.002 mN/m) than the L/T blend (0.08 mN/m) and stable dynamic behavior for several types of crude oil and at a wide range of temperature values. This suggests that MEL and T molecules pack more closely at the oil/water interface. The condensed packing at the interface can be due to favorable interactions between the tail and head group of both MEL and T molecules. The common structure of MELs has two fatty acid tails, which are C8-C12 in length (hydrophobic chain), and a mannosylerythritol head group (hydrophilic head). On the other hand, T has an oleyl tail, which is C18 and three hydrophilic oxyethylene head groups.

The MEL-based oil dispersant formulation also shows higher DE (94%) for fresh Troll B oil at DOR 1:25, during BFT tests, than the ionic liquids-based oil dispersant for Arab and Ratawi crude oil. [20]. The MEL-based oil dispersant formulation presents ultra-low IFT values (0.010 - 0.002 mN/m) in weathered 200 ºC+ Troll B oil after 1 h at 5 and 60 ºC (DOR 1:20). Despite IFT measurements for the ionic liquids-based oil dispersant in Arab crude oil also showed ultra-low IFT values (0.006 - 0.004 mN/m) at 25 °C and 50 °C (DOR 1:10), Baharuddin et al. [20] do not specify the time considered for measurements. Baharuddin et al. [20] also report a considerable increase in the IFT between 25 to 50 ºC at low salinity (i.e., <3 wt.%).

*Evaluation of the MEL based oil dispersant formulations toxicity in a marine environment*

In an embodiment, a standardized protocol was used to evaluate the toxicity of the MEL-based oil dispersant formulation in a marine environment, following a 24h $LC_{50}$ bioassay using brine shrimp (*Artermia*) and its hatching. This bioassay was conducted according to the standard operational procedures of the marine toxicity screening test Artoxkit M, obtained from Microbiotests Inc., using instar II-III larvae of the brine shrimp *Artemia franciscana* hatched from cysts, standard seawater medium with a salinity of 35 ppt and a 24 multiwell test plate, provided in the commercial kit.

In an embodiment, the hatching of the cysts, carried out through exposure to a light source (minimum of 3000-4000 lux) during 30 h at 25 °C, starts after about 18-20 h. After 30 h most of the larvae are in the desired instar II-III stage. The larvae are then transferred from the hatching medium to a rinsing well containing 1 ml of the test solution, thus exposing the larvae to the appropriate test solution before they entered the actual test well and minimizing dilution of the test solution during transfer. For each compound tested, the bioassay included one control and five concentrations of the tested compound, each of them with 3 replicates of 10 animals. The incubation was carried out in the dark at 25 °C and for 24 hours, then the dead larvae in each test solution well were counted to estimate the percentage of mortality. The median lethal concentration ($LC_{50}$) was calculated from the five assays with different concentrations.

In an embodiment, the toxicity for the marine environment was evaluated for MEL-based oil dispersant formulation (42% (w/w) blend of MELs, 28% (w/w) TWEEN® 80 and 30% (w/w) solvent base), against a formulation without MEL (i.e., with 48% (w/w) Tween® 80 and 52% (w/w) solvent base), MEL and Corexit 9500. The results are presented in table 3.

Table 3: *Artemia franciscana* toxicity tests of MEL-based oil formulation, formulation components, MEL, Corexit® 9500.

| Compound | $LC_{50}$ (mg/l) |
|---|---|
| Corexit® 9500 | 78.9 ± 2.8 |
| MEL-based oil dispersant formulation | 405.2 ± 10.3 |
| TWEEN® 80 + solvent base (i.e. oil formulation without MEL) | 182.2 ± 4.4 |
| MEL | 512.7 ± 66.8 |

According to the results (Table 3), Corexit showed strong a toxicity ($LC_{50}$ of 78.9), the mixture of Tween® 80 and the solvent base (the developed formulation without MEL) exhibits a moderate cytotoxicity ($LC_{50}$ of 182.2 mg/l) and MEL showed a weak toxicity in *A. franciscana* ($LC_{50}$ higher than 400 mg/l). Surprisingly, the MEL-based oil dispersion formulation (MEL + TWEEN® 80 + solvent base) not only showed a much lower toxicity than Corexit, but also a weaker toxicity ($LC_{50}$ of 405.2 ± 10.3 mg/l) as compared to the formulation without MEL ($LC_{50}$ of 182.2 ± 4.4 mg/l), disclosing for the first time the surprising effect of MEL as an environmentally friendly agent not only when used alone, but also its positive effect when used in combinations with other dispersant agents.

*Evaluation of the MEL-based oil dispersant formulations for marine environment crude oil bioremediation*

In an embodiment, biodegradation studies of crude oil were performed in 250 ml baffled shaking flasks with a working volume of 100 ml of seawater medium (i.e., 50% (v/v) seawater and 50% (v/v) Bushnell-Haas medium). Seawater was collected from coordinates 38º24.977N, 8º58.073W at a distance of 3 to 5 km from the coast of Setubal, Portugal at a depth of 74 m, placed at 25 ºC and filtered using 25 μm paper filter. In this assay, the oil biodegradation relies on endogenous microorganisms present on the seawater, as no additional microorganisms were inoculated. Troll B crude oil was used as sole carbon source, pre-mixed with the oil dispersant formulations, as previous described, and applied to the sea water media. The flasks containing these solutions were incubated at 25ºC for 7 days (150 rpm). At the end the experiment, 10 mL of HCl (15 % v/v) was added for microbiological inactivation and the resulting aqueous solution samples were stored at 4 °C not more than up to 3 days. Then, two step extractions of the hydrocarbon contents in such aqueous samples were extracted by two step extractions using n-hexane (50 ml aqueous solution + 25 ml of n-hexane, ≥95%, HPLC grade, Fisher Chemical), adding 0.1 mL of pristane (10 g/L in n-hexane) as an internal standard. The upper phases (organic) were concentrated by evaporation of n-hexane, using a rotary evaporator, until a volume of roughly 2 ml. The concentrated sample was filtered with a Pasteur pipette containing cotton, silica gel and anhydrous sodium sulphate and transferred to a glass vial. Its volume was further reduced to 0.9 ml using nitrogen stripping and then 0.1 ml of 5-α-androstane (10 g/l in n-hexane) was added as an external standard. Samples were stored at -20 °C prior to gas chromatography analysis.

In an embodiment, total hydrocarbon content (THC) samples taken from the bioremediation assay were assessed. THC comprises a large family of chemical compounds originally driven from crude oil. Crude oil comprises a very complex mixture made of many different chemicals. Therefore, for practical reasons, instead of measure each individual compound, THC is measured together to assess the evolution amount of crude oil present at an oil spill site. THC were analysed by a GC (Hewlett-Packard, HP5890) fitted with a flame ionization detector (FID) and with an oven temperature set to be held first at an initial value of 60 °C, over 2 min, then to increase at a rate of 6°C/min until it reaches 310°C, and finally to be held at such value for a final 5 min. The injector and detector the temperatures were set to be was 300°C and 310°C respectively. Injected sample volume was 1 μL. Calibration curves were made for both crude oil and alkane mixture standards using a series of dilutions (5 g/L, 2 g/L, 1 g/L, 0.5 g/L, 0.2 g/L in n-hexane) with 5-α-androstane as an internal standard. A relative response factor (RRF) was then calculated using equation 5 based on the concentrations (C) and areas (A) of the internal (andr) and external alkane standards (std). Moreover, the internal standards of pristane (prist) were added to the aqueous solution to quantify the percentage of hydrocarbons recovered in the extraction, using equation 5.

$$RRF = \frac{A_{andr} \times C_{std}}{A_{std} \times C_{andr}} \quad \text{(Equation 5)}$$

$$Recovery\ (\%) = \frac{A_{andr}}{A_{prist}} \quad \text{(Equation 6)}$$

For the crude oil samples, the total area ($A_{total}$) was obtained by integration of the GC-FID spectrum peaks. The THC area ($A_{THC}$) was then calculated by subtracting the area of the internal standards ($A_{andr}$, $A_{pris}$) to the total area (equation 7) and the concentration of hydrocarbons in each sample ($C_{THC}$) was then calculated using the equation 8.

$$A_{THC} = A_{total} - A_{andr} - A_{pris} \quad \text{(Equation 7)}$$

$$C_{THC} = \frac{A_{THC} \times C_{andr}}{A_{andr}} \times RRF \times Recovery \quad \text{(Equation 8)}$$

In an embodiment, Corexit® 9500 (I) was used as benchmarking, to assess the bioremediation efficiency of the MEL-based oil dispersant formulation (II) against the formulation without MEL (TWEEN® + solvent base) (III) and MEL alone (IV). Troll B crude oil was pre-heated at 50 ºC for 1 h and mixed with the oil dispersant at 500 rpm for 3 h at room temperature, employing 1:20 dispersant to oil ratio (DOR) for formulations I, II and III, and 1:48 DOR for formulation IV (formulations II and IV employs the same amount of MEL). The results on Figure 5 shows, in comparison with the control, a decrease on $C_{THC}$ when any of the four oil dispersant formulations was used for 7 days. This result shows a clear efficiency of the four formulations assessed at laboratory scale. However, for applications on real settings, the efficiency and safety of those formulations rely on effective dispersion and low environment impact as evaluated, respectively, by IFT and $LC_{50}$ values, pointing out for the superior performance of the MEL-based oil dispersant formulation.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

**References:**

1. Gbadamosi, A.O., et al., An overview of chemical enhanced oil recovery: recent advances and prospects. International Nano Letters, 2019. 9(3): p. 171-202.

2. Sandersen, S.B., Enhanced Oil Recovery with Surfactant Flooding, in Department of Chemical and Biochemical Engineering. 2012, Technical University of Denmark: Konges Lingby, Denmark.

3. Belhaj, A.F., et al., The effect of surfactant concentration, salinity, temperature, and pH on surfactant adsorption for chemical enhanced oil recovery: a review. Journal of Petroleum Exploration and Production Technology, 2020. 10(1): p. 125-137.

4. Almeda, R., C. Hyatt, and E.J. Buskey, Toxicity of dispersant Corexit 9500A and crude oil to marine microzooplankton. Ecotoxicology and Environmental Safety, 2014. 106: p. 76-85.

5. Kleindienst, S., et al., Chemical dispersants can suppress the activity of natural oil-degrading microorganisms. Proceedings of the National Academy of Sciences, 2015. 112(48): p. 14900.

6. Garr, A.L., S. Laramore, and W. Krebs, Toxic Effects of Oil and Dispersant on Marine Microalgae. Bulletin of Environmental Contamination and Toxicology, 2014. 93(6): p. 654-659.

7. Banat, I.M., et al., Microbial biosurfactants production, applications and future potential. Applied Microbiology and Biotechnology, 2010. 87(2): p. 427-444.

8. Soberón-Chávez, G. and R.M. Maier, Biosurfactants: A General Overview, in Biosurfactants: From Genes to Applications, G. Soberón-Chávez, Editor. 2011, Springer Berlin Heidelberg: Berlin, Heidelberg. p. 1-11.

9. Aparna, A., G. Srinikethan, and H. Smitha, Production and characterization of biosurfactant produced by a novel Pseudomonas sp. 2B. Colloids and Surfaces B: Biointerfaces, 2012. 95: p. 23-29.

10. Yu, M., et al., Characteristics of mannosylerythritol lipids and their environmental potential. Carbohydrate Research, 2015. 407: p. 63-72.

11. Freitas, B., et al., Formulation of a Commercial Biosurfactant for Application as a Dispersant of Petroleum and By-products Spilled in Oceans. Frontiers in Microbiology, 2016. 7(1646).

12. Figueiredo Nascimento, M., Mannosylerythritol lipids bioproduction by Moesziomyces spp.: assessing alternative culture strategies and nanofiltration downstream purification, in Department of Bioengineering. 2017, University of Lisbon.

13. Mackay, D. and F. Szeto, The laboratory determination of dispersant effectiveness: method development and results. International Oil Spill Conference Proceedings, 1981. 1981(1): p. 11-17.

14. Zhang, K., et al., Generation of shrimp waste-based dispersant for oil spill response. Environmental Science and Pollution Research, 2018. 25(10): p. 9443-9453.

15. Sorial, G.A., et al., Oil Spill Dispersant Effectiveness Protocol. II: Performance of Revised Protocol. Journal of Environmental Engineering, 2004. 130(10): p. 1085-1093.

16. Chandrasekar, S., G.A. Sorial, and J.W. Weaver, Dispersant effectiveness on oil spills - impact of salinity. ICES Journal of Marine Science, 2006. 63(8): p. 1418-1430.

17. Athas, J.C., et al., An Effective Dispersant for Oil Spills Based on Food-Grade Amphiphiles. Langmuir, 2014. 30(31): p. 9285-9294.

18. Jin, J., et al., An efficient and environmental-friendly dispersant based on the synergy of amphiphilic surfactants for oil spill remediation. Chemosphere, 2019. 215: p. 241-247.

19. Shah, M.U.H., et al., A binary mixture of a biosurfactant and an ionic liquid surfactant as a green dispersant for oil spill remediation. Journal of Molecular Liquids, 2019. 280: p. 111-119.

20. Baharuddin, S.H., et al., Development, formulation and optimization of a novel biocompatible ionic liquids dispersant for the effective oil spill remediation. Chemosphere, 2020. 249: p. 126125.

**Claims**

1. An oil dispersant composition for dispersing a crude oil or a petrochemical spill comprising:

at least 20% (w/w) of a gum comprising a mixture of mannosylerythritol lipids;
at least 10% (w/w) polyethylene glycol sorbitan ester; and
at least 20% (w/w) of a hydrophobic organic solvent, wherein said organic solvent has a flash point superior to 60 °C;
preferably the polyethylene glycol sorbitan ester is polyethylene glycol sorbitan monooleate.

2. The oil dispersant composition according to the previous claim comprising

35-45 % (w/w) of the gum comprising a mannosylerythritol lipids mixture, preferably 42 % (w/w);
25-30 % (w/w) of polyethylene glycol sorbitan ester preferably 28 % (w/w) of polyethylene glycol sorbitan ester; and
25-35 % (w/w) of the hydrophobic organic solvent, preferably 30%(w/w).

3. The composition according to any of the previous claims wherein the number of carbons in the fatty chains of the mannosylerythritol lipids range from C8 to C12, preferably C10.

4. The oil dispersant composition according to any of the previous claims wherein at least 50% (w/w) of the fatty chains of mannosylerythritol lipids are C10 chain, preferably 82% (w/w) of the fatty chains of mannosylerythritol lipids are C10 chain.

5. The oil dispersant composition according to any of the previous claims wherein the mannosylerythritol lipids are selected from a list comprising di-acetylated mannosylerythritol lipid, mono-acetylated mannosylerythritol lipid, de-acetylated mannosylerythritol lipid, or mixtures thereof.

6. The oil dispersant composition according to any of the previous claims wherein the gum comprises a mixture of:

at least 50% (w/w) of di-acetylated mannosylerythritol lipid, preferably 55 - 70 % (w/w);
15% (w/w) to 50% (w/w) of mono-acetylated mannosylerythritol lipid, preferably 20 - 35% (w/w); and
less than 35 % (w/w) of de-acetylated mannosylerythritol lipid, preferably 2 - 10 % (w/w);
preferably the gum comprises a mixture of:
68% (w/w) of di-acetylated mannosylerythritol lipid;
28% (w/w) of mono-acetylated mannosylerythritol lipid; and
4% (w/w) of de-acetylated mannosylerythritol lipid.

7. The oil dispersant composition according to any of the previous claims wherein the solvent comprises 65-70 % (v/v) of a lighter fuel, wherein the lighter fuel is a gas, oil, or other fuel used in a lighter, a combination of hydrocarbons, C10-C13, n-alkanes, iso-alkanes, cyclic, <2% aromatics, or the white spirit type 3 (EC nº 918-481-9, or CAS nº 64742-48-9.

8. The oil dispersant composition according to the previous claim wherein the solvent further comprises 30-35 % (v/v) of 2-ethylhexyl acetate.

9. The oil dispersant composition according to any of the previous claims wherein the mass ratio between mannosylerythritol lipids and polyethylene glycol sorbitan ester is 60:40.

10. The oil dispersant composition according to any of the previous claims wherein the hydrophilic-lipophilic balance of the oil dispersant composition ranges from 8 to 20, preferably from 8 to 12.

11. A method for obtaining an oil dispersant composition as described in any of the previous claims 1-10 comprising the following steps:

obtaining a gum comprising mannosylerythritol lipids mixture;
blending the mannosylerythritol lipids mixture with polyethylene glycol sorbitan ester and with a solvent base;
preferably the solvent base comprises 65-70 % (v/v) of lighter fuel and 30-35 % (v/v) of 2-ethylhexyl acetate, more preferably 66.7% (v/v) of lighter fuel and 33.3% (v/v) of 2-ethylhexyl acetate.

12. A method for dispersing an oil spill, comprising a step of applying an oil dispersant composition as described in any one of claims 1 to 10 into an oil in a body of water, preferably the body of water has a salinity ranging from 0 to 5 wt%.

13. The method according to the previous claim, wherein the oil dispersant composition is applied to the oil in a dispersant to oil ratio ranging from 1:1000 to 1:20, preferably ranging from 1:900 to 1:500.

14. The method according to any of the claims 12-13, wherein the dynamic dispersion effectiveness of the oil dispersant composition in the body of water ranges from 95 to 100% at 22 °C, wherein the dynamic dispersion effectiveness is measured by a Baffled Flask test.

15. The method according to any of the claims 12-14, wherein the static dispersant effectiveness of the oil dispersant composition in the body of water ranges from 45 to 70% at 13 °C, wherein the static dispersant effectiveness is measured by a Mackay-Nadeau-Steelman dispersibility test.

**Patentansprüche**

1. Eine Öldispersionsformulierung zum Dispergieren eines Rohöls oder einer petrochemischen Leckage, umfassend:

   mindestens 20 % (w/w) eines Gummis, umfassend eine Mischung aus Mannosylerythritol-Lipiden;
   mindestens 10 % (w/w) Polyethylenglykol Sorbitanester; und
   mindestens 20 % (w/w) eines hydrophoben organischen Lösungsmittels, wobei das genannte organische Lösungsmittel einen Flammpunkt von über 60 °C aufweist;
   wobei das Polyethylenglykol Sorbitanester bevorzugt Polyethylenglykol Sorbitanmonooleat ist.

2. Die Öldispersionsformulierung nach dem vorangehenden Anspruch, umfassend

   35-45 % (w/w) des Gummis, umfassend eine Mischung aus Mannosylerythritol-Lipiden, bevorzugt 42 % (w/w);
   25-30 % (w/w) Polyethylenglykol Sorbitanester, bevorzugt 28 % (w/w) Polyethylenglykol Sorbitanester; und
   25-35 % (w/w) des hydrophoben organischen Lösungsmittels, bevorzugt 30 % (w/w).

3. Die Formulierung nach einem der vorangehenden Ansprüche, wobei die Anzahl der Kohlenstoffe in den Fettketten der Mannosylerythritol-Lipide im Bereich von C8 bis C12, bevorzugt C10, liegt.

4. Die Öldispersionsformulierung nach einem der vorangehenden Ansprüche, wobei mindestens 50 % (w/w) der Fettketten der Mannosylerythritol-Lipide C10-Ketten sind, bevorzugt 82 % (w/w) der Fettketten der Mannosylerythritol-Lipide C10-Ketten sind.

5. Die Öldispersionsformulierung nach einem der vorangehenden Ansprüche, wobei die Mannosylerythritol-Lipide aus einer Liste ausgewählt sind, umfassend diacetyliertes Mannosylerythritol-Lipid, monoacetyliertes Mannosylerythritol-Lipid, deacetyliertes Mannosylerythritol-Lipid, oder Mischungen davon.

6. Die Öldispersionsformulierung nach einem der vorangehenden Ansprüche, wobei das Gummi eine Mischung umfasst, aus:

   mindestens 50% (w/w) diacetyliertes Mannosylerythritol-Lipid, bevorzugt 55 - 70 % (w/w);
   15 % (w/w) bis 50 % (w/w) monoacetyliertes Mannosylerythritol-Lipid, bevorzugt 20 bis 35 % (w/w); und
   weniger als 35 % (w/w) deacetyliertes Mannosylerythritol-Lipid, bevorzugt 2 - 10 % (w/w);
   wobei der Gummi bevorzugt eine Mischung umfasst aus:
   68 % (w/w) diacetyliertem Mannosylerythritol-Lipid;
   28 % (w/w) monoacetyliertem Mannosylerythritol-Lipid; und
   4 % (w/w) deacetyliertem Mannosylerythritol-Lipid.

7. Die Öldispersionsformulierung nach einem der vorangehenden Ansprüche, wobei das Lösungsmittel 65-70 % (v/v) eines Leichtbenzins umfasst, wobei das Leichtbenzin ein Gas, Öl oder ein anderer, in einem Feuerzeug verwendeter Brennstoff ist, eine Kombination aus Kohlenwasserstoffen, C10-C13, n-Alkanen, Iso-Alkanen, zyklisch, <2% Aromaten, oder das White-Spirit Typ 3 (EC Nr. 918-481-9, oder CAS Nr. 64742-48-9).

8. Die Öldispersionsformulierung nach dem vorangehenden Anspruch, wobei das Lösungsmittel ferner 30-35 % (v/v) 2-Ethylhexylacetat umfasst.

9.  Die Öldispersionsformulierung nach einem der vorangehenden Ansprüche, wobei das Massenverhältnis zwischen Mannosylerythritol-Lipiden und Polyethylenglykol Sorbitanester 60:40 beträgt.

10. Die Öldispersionsformulierung nach einem der vorangehenden Ansprüche, wobei das hydrophil-lipophile Gleichgewicht der Öldispersionsformulierung zwischen 8 und 20 liegt, bevorzugt zwischen 8 und 12.

11. Ein Verfahren zur Herstellung einer Öldispersionsformulierung wie in einem der vorangehenden Ansprüche 1-10 beschrieben, umfassend die folgenden Schritte:

    Gewinnen eines Gummis, umfassend eine Mischung aus Mannosylerythritol-Lipiden;
    Mischen des Mannosylerythritol-Lipid-Gemischs mit Polyethylenglykol Sorbitanester und mit einer Lösungsmittelbasis;
    die Lösungsmittelbasis bevorzugt aus 65-70 % (v/v) Leichtbenzin und 30-35 % (v/v) 2-Ethylhexylacetat, besonders bevorzugt aus 66,7 % (v/v) Leichtbenzin und 33,3 % (v/v) 2-Ethylhexylacetat besteht.

12. Ein Verfahren zum Dispergieren einer Ölleckage, umfassend einen Schritt des Auftragens einer Öldispersionsformulierung, wie in einem der Ansprüche 1 bis 10 beschrieben, in ein Öl in einer Wassermasse, wobei die Wassermasse bevorzugt einen Salzgehalt im Bereich von 0 bis 5 wt % aufweist.

13. Das Verfahren nach dem vorangehenden Anspruch, wobei die Öldispersionsformulierung in einem Verhältnis Dispersionsmittel-zu-Öl im Bereich von 1:1000 bis 1:20, bevorzugt im Bereich von 1:900 bis 1:500, auf das Öl aufgebracht wird.

14. Das Verfahren nach einem der Ansprüche 12-13, wobei die dynamische Dispergierwirkung der Öldispersionsformulierung in der Wassermasse im Bereich von 95 bis 100 % bei 22 °C liegt, wobei die dynamische Dispergierwirkung durch einen Baffled-Flask-Test gemessen wird.

15. Das Verfahren nach einem der Ansprüche 12-14, wobei die statische Dispergierwirkung der Öldispersionsformulierung in der Wassermasse im Bereich von 45 bis 70 % bei 13 °C liegt, wobei die statische Dispergierwirkung durch einen Mackay-Nadeau-Steelman-Dispersionstest gemessen wird.


**Revendications**

1.  Une composition de dispersant d'huile pour disperser un pétrole brut ou un déversement pétrochimique comprenant :

    au moins 20% (poids/poids) d'une gomme comprenant un mélange de lipides de mannosylérythritol ;
    au moins 10% (poids/poids) d'ester de sorbitane de polyéthylène glycol ; et
    au moins 20% (poids/poids) d'un solvant organique hydrophobe, dans lequel ledit solvant organique a un point d'éclair supérieur à 60°C ;
    l'ester de sorbitane de polyéthylène glycol étant préférablement du monooléate de sorbitane de polyéthylène glycol.

2.  La composition de dispersant d'huile selon la revendication précédente comprenant 35-45% (poids/poids) de la gomme comprenant le mélange de lipides de mannosylérythritol, préférablement 42% (poids/poids) ;

    25-30% (poids/poids) d'ester de sorbitane de polyéthylène glycol préférablement 28% (poids/poids) d'ester de sorbitane de polyéthylène glycol ; et
    25-35% (poids/poids) du solvant organique hydrophobe, préférablement 30% (poids/poids).

3.  La composition selon l'une quelconque des revendications précédentes dans laquelle le nombre de carbones dans les chaînes grasses des lipides de mannosylérythritol varie de C8 à C12, préférablement C10.

4.  La composition de dispersant d'huile selon l'une quelconque des revendications précédentes dans laquelle au moins 50% (poids/poids) des chaînes grasses de lipides de mannosylérythritol sont une chaîne C10, préférablement 82% (poids/poids) des chaînes grasses de lipides de mannosylérythritol sont une chaîne C10.

5.  La composition de dispersant d'huile selon l'une quelconque des revendications précédentes dans laquelle les lipides de mannosylérythritol sont choisis parmi une liste comprenant le lipide de mannosylérythritol diacétylé, le lipide de mannosylérythritol monoacétylé, le lipide de mannosylérythritol désacétylé, ou des mélanges de ceux-ci.

6. La composition de dispersant d'huile selon l'une quelconque des revendications précédentes dans laquelle la gomme comprend un mélange de :

au moins 50% (poids/poids) de lipide de mannosylérythritol diacétylé, préférablement 55-70% (poids/poids) ;
15% (poids/poids) à 50% (poids/poids) de lipide de mannosylérythritol monoacétylé, préférablement 20-35% (poids/poids) ; et
moins de 35% (poids/poids) de lipide de mannosylérythritol désacétylé, préférablement 2-10% (poids/poids) ;
la gomme comprenant préférablement un mélange de :

68% (poids/poids) de lipide de mannosylérythritol diacétylé ;
28% (poids/poids) de lipide de mannosylérythritol monoacétylé ; et
4% (poids/poids) de lipide de mannosylérythritol désacétylé.

7. La composition de dispersant d'huile selon l'une quelconque des revendications précédentes dans laquelle le solvant comprend 65-70% (volume/volume) d'une essence pour briquet, dans laquelle l'essence pour briquet est un gaz, une huile, ou un autre combustible utilisé dans un briquet, une combinaison d'hydrocarbures, C10-C13, n-alcanes, iso-alcanes, cycliques, <2% aromates, ou le white spirit de type 3 (EC n⁰918-481-9, ou CAS n⁰64742-48-9).

8. La composition de dispersant d'huile selon la revendication précédente dans laquelle le solvant comprend également 30-35% (volume/volume) d'acétate 2-éthylhexyl.

9. La composition de dispersant d'huile selon l'une quelconque des revendications précédentes dans laquelle le rapport de masse entre les lipides de mannosylérythritol et l'ester de sorbitane de polyéthylène glycol est de 60:40.

10. La composition de dispersant d'huile selon l'une quelconque des revendications précédentes dans laquelle l'équilibre hydrophile/lipophile de la composition de dispersant d'huile varie de 8 à 20, préférablement de 8 à 12.

11. Un procédé d'obtention d'une composition de dispersant d'huile telle que décrite dans l'une quelconque des revendications 1-10 comprenant les étapes suivantes :

obtenir une gomme comprenant un mélange de lipides de mannosylérythritol ;
mélanger le mélange de lipides de mannosylérythritol avec de l'ester de sorbitane de polyéthylène glycol et avec une base de solvant ;
la base de solvant comprenant préférablement 65-70% (volume/volume) d'essence pour briquet et 30-35% (volume/volume) d'acétate 2-éthylhexyl, plus préférablement 66,7% (volume/volume) d'essence pour briquet et 33,3% (volume/volume) d'acétate 2-éthylhexyl.

12. Un procédé pour disperser un déversement d'huile, comprenant une étape consistant à appliquer une composition de dispersant d'huile telle que décrite dans l'une quelconque des revendications 1 à 10 dans une huile dans une masse d'eau, la masse d'eau ayant préférablement une salinité variant de 0 à 5% en poids.

13. Le procédé selon la revendication précédente, dans lequel la composition de dispersant d'huile est appliquée à l'huile, le rapport entre dispersant et huile variant de 1:1000 à 1:20, variant préférablement de 1:900 à 1:500.

14. Le procédé selon l'une quelconque des revendications 12-13, dans lequel l'efficacité de la dispersion dynamique de la composition de dispersant d'huile dans la masse d'eau varie de 95 à 100% à 22°C, dans lequel l'efficacité de la dispersion dynamique est mesurée par un test de flacon bafflé.

15. Le procédé selon l'une quelconque des revendications 12-14, dans lequel l'efficacité de dispersant statique de la composition de dispersant d'huile dans la masse d'eau varie de 45 à 70% à 13°C, dans lequel l'efficacité de dispersant statique est mesurée par un test de dispersibilité de Mackay-Nadeau-Steelman.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VENKATARAMAN SWETHAA et al.** *Extraction, purification and applications of biosurfactants based on microbial-derived glycolipids and lipopetides: a review*
- **BANAT I M et al.** *Potential commercial applications of microbial surfactants*
- *CHEMICAL ABSTRACTS*, 64742-48-9
- **GBADAMOSI, A.O. et al.** An overview of chemical enhanced oil recovery: recent advances and prospects. *International Nano Letters*, 2019, vol. 9 (3), 171-202
- **SANDERSEN, S.B.** Enhanced Oil Recovery with Surfactant Flooding, in Department of Chemical and Biochemical Engineering. Technical University of Denmark, 2012
- **BELHAJ, A.F. et al.** The effect of surfactant concentration, salinity, temperature, and pH on surfactant adsorption for chemical enhanced oil recovery: a review. *Journal of Petroleum Exploration and Production Technology*, 2020, vol. 10 (1), 125-137
- **ALMEDA, R.** ; **C. HYATT** ; **E.J. BUSKEY**. Toxicity of dispersant Corexit 9500A and crude oil to marine microzooplankton. *Ecotoxicology and Environmental Safety*, 2014, vol. 106, 76-85
- **KLEINDIENST, S. et al.** Chemical dispersants can suppress the activity of natural oil-degrading microorganisms. *Proceedings of the National Academy of Sciences*, 2015, vol. 112 (48), 14900
- **GARR, A.L.** ; **S. LARAMORE** ; **W. KREBS**. Toxic Effects of Oil and Dispersant on Marine Microalgae. *Bulletin of Environmental Contamination and Toxicology*, 2014, vol. 93 (6), 654-659
- **BANAT, I.M. et al.** Microbial biosurfactants production, applications and future potential. *Applied Microbiology and Biotechnology*, 2010, vol. 87 (2), 427-444
- Biosurfactants: A General Overview. **SOBERÓN-CHÁVEZ, G.** ; **R.M. MAIER**. Biosurfactants: From Genes to Applications. Springer Berlin Heidelberg, 2011, 1-11
- **APARNA, A.** ; **G. SRINIKETHAN** ; **H. SMITHA**. Production and characterization of biosurfactant produced by a novel Pseudomonas sp. 2B. *Colloids and Surfaces B: Biointerfaces*, 2012, vol. 95, 23-29

- **YU, M. et al.** Characteristics of mannosylerythritol lipids and their environmental potential. *Carbohydrate Research*, 2015, vol. 407, 63-72
- **FREITAS, B. et al.** Formulation of a Commercial Biosurfactantfor Application as a Dispersant of Petroleum and By-products Spilled in Oceans. *Frontiers in Microbiology*, 2016, vol. 7 (1646)
- Mannosylerythritol lipids bioproduction by Moesziomyces spp.: assessing alternative culture strategies and nanofiltration downstream purification. **FIGUEIREDO NASCIMENTO, M.** Department of Bioengineering. University of Lisbon, 2017
- **MACKAY, D.** ; **F. SZETO**. The laboratory determination of dispersant effectiveness: method development and results. *International Oil Spill Conference Proceedings*, 1981, vol. 1981 (1), 11-17
- **ZHANG, K. et al.** Generation of shrimp waste-based dispersant for oil spill response. *Environmental Science and Pollution Research*, 2018, vol. 25 (10), 9443-9453
- **SORIAL, G.A. et al.** Oil Spill Dispersant Effectiveness Protocol. II: Performance of Revised Protocol. *Journal of Environmental Engineering*, 2004, vol. 130 (10), 1085-1093
- **CHANDRASEKAR, S.** ; **G.A. SORIAL** ; **J.W. WEAVER**. Dispersant effectiveness on oil spills - impact of salinity. *ICES Journal of Marine Science*, 2006, vol. 63 (8), 1418-1430
- **ATHAS, J.C. et al.** An Effective Dispersant for Oil Spills Based on Food-Grade Amphiphiles. *Langmuir*, 2014, vol. 30 (31), 9285-9294
- **JIN, J. et al.** An efficient and environmental-friendly dispersant based on the synergy of amphiphilic surfactants for oil spill remediation. *Chemosphere*, 2019, vol. 215, 241-247
- **SHAH, M.U.H. et al.** A binary mixture of a biosurfactant and an ionic liquid surfactant as a green dispersant for oil spill remediation. *Journal of Molecular Liquids*, 2019, vol. 280, 111-119
- **BAHARUDDIN, S.H. et al.** Development, formulation and optimization of a novel biocompatible ionic liquids dispersant for the effective oil spill remediation. *Chemosphere*, 2020, vol. 249, 126125